Europäisches Patentamt

(19) European Patent Office

Office européen des brevets

(11) Publication number : **0 288 120 B1**

(12) **EUROPEAN PATENT SPECIFICATION**

(45) Date of publication of patent specification :
23.10.91 Bulletin 91/43

(51) Int. Cl.⁵ : **A21C 9/06**

(21) Application number : 88200722.2

(22) Date of filing : 14.04.88

(54) **Food product and method for its preparation.**

(30) Priority : 22.04.87 GB 8709477

(43) Date of publication of application :
26.10.88 Bulletin 88/43

(45) Publication of the grant of the patent :
23.10.91 Bulletin 91/43

(84) Designated Contracting States :
AT BE CH DE ES FR GB GR IT LI NL SE

(56) References cited :
FR-A- 2 222 015
US-A- 3 225 710
US-A- 3 225 717
US-A- 3 876 743
US-A- 4 098 179

(72) Inventor : McBride, Malcolm John
109 Main Street Little Harrowden nr
Wellingborough
Northants. NN9 5BA (GB)
Inventor : Luck, Richard Henry
19 Wells Road
Riseley Beds. MK44 1DW (GB)
Inventor : Vale, Christopher John
15 High Street
Souldrop, Beds. MK44 1EY (GB)

(74) Representative : Hartong, Richard Leroy et al
Unilever N.V. Patent Division P.O. Box 137
NL-3130 AC Vlaardingen (NL)

(73) Proprietor : UNILEVER NV
Burgemeester s'Jacobplein 1 P.O. Box 760
NL-3000 DK Rotterdam (NL)
(84) Designated Contracting States :
BE CH DE ES FR GR IT LI NL SE AT
Proprietor : UNILEVER PLC
Unilever House Blackfriars P.O. Box 68
London EC4P 4BQ (GB)
(84) Designated Contracting States :
GB

## Description

This invention relates to an edible container and to a method of producing such a container.

It is known from French Patent Specification FR-A-2222015 how to prepare hollow, baked products, like e.g. tubular waffle shapes, by winding a strip of baked waffle material helically on a mandrel in edgewise overlapping relationship. The overlapping edges are pressed together by a guide roller to ensure good adhesion and the hollow, baked product is then filled with a creamy substance or the inside surface may at least be partially coated with an edible coating material. The disadvantage of this method is the restriction which is posed on the number of raw materials which can be used, since the wafer dough needs to be of such a composition that in the baked, warm state it is still soft and pliable. This usually requires a wafer dough of a rather high sugar content. Any other baked dough, which can be made in the form of continuous, flexible strips, needs to have a very specific composition so that it can be handled in baked condition in the required way. Moreover, with this known method it is only possible to use one single material ; the use of wafer material of two different types with different textures is hardly possible, if at all.

It is an object of the present invention to eliminate the above-mentioned disadvantages.

According to the invention there is provided an edible container comprising a plurality of strips of edible material helically wound in the same sense of rotation so as to form a hollow body, which is characterized in that the edible material is selected from raw bakery dough and meal dough and the strips have different compositions and/or colours and/or textures.

Preferably, the edible material is a raw bakery dough, whereas the hollow body preferably at least partially contains a filling. The strips of edible material may continuously overlap or abut or they may be wound such that they do not touch one another. By a strip is understood throughout this specification an elongate body of which one of its three dimensions is markedly greater than the other two and generally has a rectangular cross-sectional area. The shape of the cross-sectional area, however, can also be elliptic, lenticular, irregular or multisided, provided that this shape does not detrimentally influence the winding process.

The use of a raw bakery dough in the manufacture of the edible, partially filled container not only enables the use of far more raw materials, but particularly offers the possibility of incorporating different textures, flavours and colours in each of the constituent strips of the hollow body, so that an entirely new range of snack products is offered. Each of the tastes, textures and compositions is individually present when the product is eaten and, in combination with a preferably savoury filling, this offers a new "mouth feel." Also the nutritive value of the product can be controlled by forming the strips of raw dough of different cereals and/or flours. Furthermore, also visual effects can be reached by differently colouring the strips of raw dough so that, after baking, the edible container exhibits a pattern of different colours. Moreover, the individual strips of raw bakery dough can contain visible pieces of edible material, like e.g. nut material, so that a combined effect of different colours and general appearance is obtained.

The strips of edible material may also consist of a meat dough, in which case dough of different types are being used. Such strips of meat dough are preferably prepared by extrusion.

"The present invention also relates to a method of producing an at least partially filled, edible container, in which a plurality of strips of edible, flexible material are helically wound in the same sense of rotation so as to form a hollow body, which is characterized in that the edible material is selected from raw bakery dough and meat dough and the strips have different compositions, and/or colours and/or textures and a filling is provided before baking the edible container.

In the method according to the present invention the filling is preferably selected from the group consisting of savoury filling materials, sweet filling materials and diary type filling materials. Most preferably the filling is sausage or a string of sausage". In this method the strips of edible, flexible material may be wound overlapping, abutting or they may be wound such that they do not touch one another. Particularly in case of overlapping or abutting strips, the surface of the strips may be provided, e.g. by spraying, with an adhesive and/or barrier coating prior to winding.

Throughout this specification and the claims, by the expression "a number of strips" is understood one or more strips.

Preferably, the raw bakery dough is a pastry dough, but also bakery dough of other types may be used, provided they can be helically wound without distorting or tearing the strips. The raw bakery dough can be coloured and/or flavoured and upon baking may acquire a different structure. Also visible pieces of food material may be present in the dough, like e.g. pieces of chopped nut material. The raw bakery dough may be flavoured with substances that have the same flavour as the filling, preferably savoury flavouring agents, but also spices and/or flavour precursors or precursor mixtures may be added to the bakery dough, so that during baking the flavour is developed and after baking the edible container is flavoured with the desired flavour.

When more than one type of raw bakery dough or a meat dough is used, in other words : when the strips of dough each have a different composition, these strips may have the same or different colours and/or tastes. The types of dough of the various strips may also have been selected in such a way that, upon baking, different textures are obtained.

If a meat dough is used, the strips each may comprise meat of different types, such as e.g. dark and light turkey meat. The meat dough strips may also comprise additives like vegetable or fungal proteins, vegetables, mushrooms, spices and the like. By "meat dough" is to be understood a dough based on meat, poultry meat and/or fish meat.

The filling material may be of a sweet, confectionary filling, a dairy-type filling, a vegetable filling, or a savoury-type filling, or combinations of filling of this type. The filling material is preferably a savoury filling, preferably a meat-based material, which may comprise meat, poultry meat and/or fish meat, vegetable protein, fungal protein, but also vegetables, spices, flavouring agents, colouring agents, and the like. The filling may also comprise mixtures of vegetables, including mushrooms ; the dairy-type filling may, for example, comprise cheese or egg and also fruit fillings may be used. The filling material should be such that in unbaked condition the filling should not run out of the edible container forming a hollow body, but it should not interfere with the bakery process.

The filling may also be preformed, like e.g. individual sausages or ropes of sausages, or may have such a consistency and/or viscosity that the filling may already have been extruded before being used as a filling mass.

In a preferred embodiment, the filling is provided with the winding of the hollow body.

After its formation, the edible container is severed into discrete pieces of the desired length. This is preferably effected whilst the edible container is still in a rotary movement and the discrete pieces of edible container are kept in this rotary movement for a period of time that is sufficient to stabilize their form.

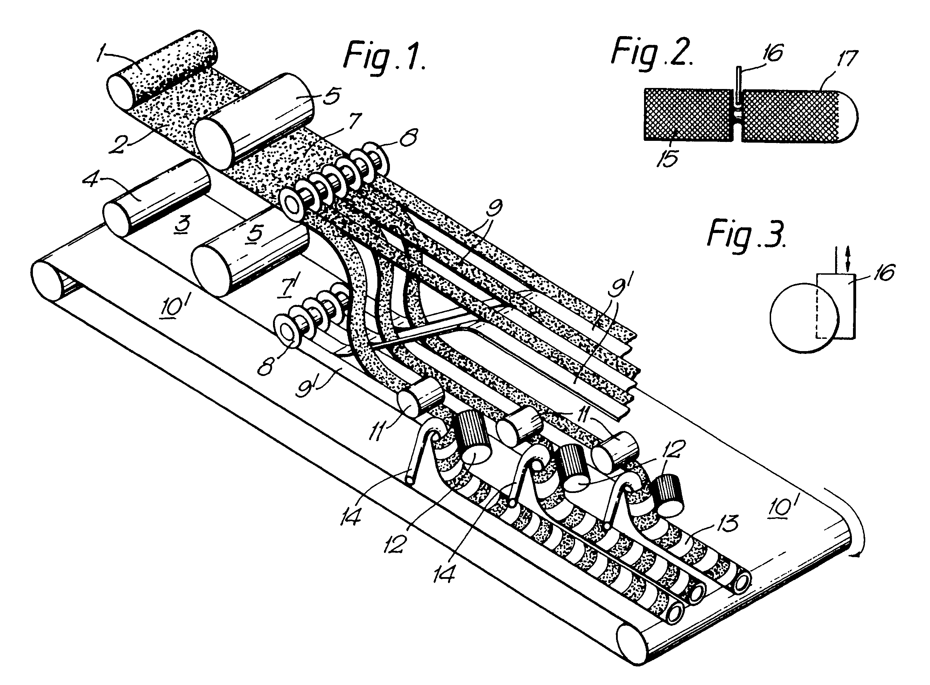

The invention will now be explained in more detail with reference to an illustrative embodiment of an apparatus for carrying out the method according to the present invention. This embodiment has been shown in the drawing, in which Fig. 1 is a perspective view showing an apparatus with which the method of the invention can be performed, Fig. 2 is a diagrammatic side view showing a rolling device with knurled surfaces and Fig. 3 is a view of the rolling device seen on top to show how the reciprocating device operates between the two parts of the rolling device. In this embodiment, two types of raw bakery dough having a different colour are used to form the edible container, viz. a darker type of dough 2, which comes from a source 1, which may be a pin of dough or a continuous dough-forming device, and a lighter type of dough 3, which comes from a source 4. Both lanes of dough are then passed under a gauging roller 5, which rolls the sheet of dough into the required thickness, which in general varies from 2 to 10 mm. These gauging rollers 5 are not strictly necessary and the dough can also be extruded from an extruder head having e.g. a wide, horizontal slit orifice.

The sheets of raw bakery dough 7,7' having the desired thickness are subsequently slit into strips of raw dough 9,9' of required width by slit cutters 8. The width of the raw dough strips may be equal or different and generally is between 5 and 30 mm.

In another embodiment of the invention, the gauging rollers 5 and slit cutters 8 are replaced by an extruder head having a plurality of horizontal slit orifices which simultaneously produce a series of ribbon-shaped extrudates, the strips of raw dough used in forming the edible container.

The strips of light and dark raw dough 9,9' are now divided over two horizontal planes situated above each other such that on each plane a series of dough strips is arranged, in which series the dark and the light dough strips alternate regularly and each dark and light dough strip is abutting, edgewise overlapping or lying close to one another, so that in this case three combined dark-light ribbons of raw bakery dough are formed.

Any other pattern of alternating raw bakery dough strips can also be used, depending on the required pattern of colours in the final, edible container. The two horizontal planes in this case consist of an endless travelling belt (10 (not shown), 10') on which the raw dough strips rest.

After their arrangement, each pair of dark-light ribbons is passed under a compression roller 11, which serves to roll the abutting or overlapping edge of a dark and light type of raw bakery dough strip firmly, so as to "weld" them together. Subsequently, the dark-light ribbons are helically wound in the same sense of rotation with continuous abutting or overlapping so as to form an endless hollow body 13 by means diagonally disposed, counter-rotating rolling devices 12 having a knurled surface. By adjusting the angle and the speed of the rolling devices 12, the raw bakery dough strips can also be arranged such that they do not abut or overlap, but are adjacent to a small gap in between them. The surfaces of the rolling devices may also be provided with a coating to provide a sufficiently high coefficient of friction between the rolling devices and the dough. Simultaneously with the helical winding, a filling mass is provided in the hollow body by means of filling pipes 14. These pipes can be stationary or rotative. By adjusting the extrusion rate of the filling, a constant product diameter is obtained, all other parameters remaining constant.

After the helically wound, at least partially filled, endless hollow body has been formed, it is severed into discrete pieces of desired length (not shown in Fig. 1). In a preferred embodiment this is done whilst the edible container is still in a rotary movement and for this purpose the rolling devices 12 are of such length that first the discrete pieces are severed from the endless edible container whilst still rotating and subsequently the severed, discrete pieces are kept in this rotary movement for a period of time which is sufficient to stabilize their form.

For this purpose the rolling device may be of the construction as depicted in Figs. 2 and 3. The first part of the device 15 serves to wind and press the dark-light ribbons of raw bakery dough into a hollow body, which is then severed into discrete pieces by a reciprocating cutting device 16, and the discrete pieces are then subjected to a form-stabilizing treatment by roller part 17. The length of the pieces and the period of stabilization can be varied by varying the relative length of the roller parts 15 and 17, the relative distances between the parts 15, 16 and 17, and the frequency of the reciprocating cutting device 16.

If required, the endless tube of helically wound raw dough can also be provided on top with a decorative coating after its formation and before being severed into discrete pieces.

The invention will now be illustrated by the following Examples.

EXAMPLE 1

A raw white bakery dough was formed, using the following recipe :

|  | wt.% |
|---|---|
| Bakers Pride Flour (a medium strength white wheat flour) | 53.99 |
| Castor Sugar (finely gound sucrose) | 4.20 |
| Bread Improver (Puratos S 500, Trade Mark; a reaction poduct of diacetyltartaric acid with mono/diglyceride) | 1.13 |
| Skimmed Milk Powder | 0.97 |
| Sodium Chloride | 0.97 |
| Dried Egg Yolk | 0.54 |
| Dried Wheat Gluten | 0.65 |
| Bakery Margarine | 4.96 |
| Bakers Yeast | 2.27 |
| Water | 30.33 |

All the ingredients were placed in the mixing bowl of a Gilbert (Trade Mark) high speed bakery mixer and mixed for sixty seconds. The raw white bakery dough thus obtained was rolled into 2.5 mm thick sheets and strips were cut with a width of 15 mm.

Similarly, strips of brown raw dough of the same dimensions were formed using the following recipe :

|  | wt.% |
|---|---|
| Bakers Pride Flour (a medium strength white wheat flour) | 44.86 |
| Castor Sugar (finely gound sucrose) | 3.49 |
| Bread Improver (as in the recipe above) | 1.13 |
| Skimmed Milk Powder | 0.80 |
| Sodium Chloride | 0.80 |
| Dried Egg Yolk | 0.43 |
| Dried Wheat Gluten | 0.54 |
| Bakery Margarine | 4.12 |
| Bakers Yeast | 1.88 |
| Water | 33.16 |
| Wheat Bran | 8.97 |

The wheat bran was hydrated using 47% of the water. All ingredients except the hydrated bran were placed in the mixing bowl of a Gilbert (Trade Mark) high speed bakery mixer and were mixed for sixty seconds. The bran was then added and the mixture mixed for a further twelve seconds. The raw brown bakery dough thus obtained was rolled into 2.5 mm thick sheets and strips were cut with a width of 15 mm.

The white and brown strips of raw bakery dough were handled in an apparatus as depicted in Fig. 1 to obtain an edible container forming a hollow body with an internal diameter of 19 mm. The rolling devices had an outer diameter of 82.6 mm, while the parts 15 and 17 had an equal length of 420 mm and the space for the reciprocating cutting device was 10 mm wide. The rolling devices were placed parallel to the horizontal and at an angle of 59 degrees to the direction of travelling belt motion. The speed of the rotating device was 10 revolutions per minute, while the speed of the travelling belt was 3.70 m/min and the reciprocating knife had a frequency of 15.6 cuts per minute. The filling mass was introduced through a pipe with an inside diameter of 15 mm ; the filling mass was a savoury filling of the following recipe :

|  | wt.% |
|---|---|
| Lean Beef Meat (90 lean/10 fat) | 91.7 |
| Sodium Chloride | 2.8 |
| Potato Starch | 4.6 |
| Seasoning | 0.9 |

This filling mass was prepared by flaking the meat, using an Urschel Comitrol (Trade Mark) flaking machine. The meat flakes and the salt were then placed in the bowl of a Hobart (Trade Mark) mixing device fitted with a gate paddle attachment. The mixture was mixed at speed 1 for 3 minutes and at speed 2 for a further 5 minutes, at which point the potato starch and seasoning were added. The mixture was then mixed for 3 minutes at speed 2.

The filling mass was extruded at a linear speed of 1.77 m/min., and had a mean diameter of 14.5 mm.

One strip of white bakery dough and one of brown bakery dough were "welded" together by rolling to form a single strip, the width of which was thus 30 mm.

The raw products produced, using the above-mentioned machine settings, had abutting joints, were 83 mm long, had a diameter of 24 mm, a mass of 34 g, and a filling mass to container mass ratio of 1 : 2.

## EXAMPLE II

A raw poultry meat dough was prepared according to the following recipe (in weight percentages) :

| Cured chicken breasts | 65.00% |
|---|---|
| Farina | 1.00% |
| Brat | 34.00% |

the composition of the brat being (in weight percentages) :

| Chicken fat | 16.00% |
|---|---|
| White chicken trimmings | 26.00% |
| Farina | 17.50% |
| Water | 37.00% |
| Curing salts, flavours, | |
| preservative | 3.50% |

The ingredients were mixed and milled to a fine consistency in a Hobart vertical Micro-cut emulsifier (Trade Mark) using a 0.8 mm cutting gap.

Also, a raw pork and ham dough was prepared (as described for the poultry meat dough), using the following recipe (in weight percentages) :

| Pork lean meat (70/30, dry cured | 12.00% |
|---|---|
| Shoulder chaps (dry cured) | 34.00% |
| Cooked ham trimmings | 25.00% |
| Brat | 29.00% |

the composition of the brat being (in weight percentages) :

| Pork meat | 51.00% |
|---|---|
| Pork fat | 26.00% |
| Farina | 2.00% |
| Water | 17.00% |
| Curing salts, flavours | |
| preservative | 4.00% |

The doughs were transferred separately to a twin-barrelled, piston-operated extrusion device and forced under pressure through a twin-slit extrusion nozzle of overall dimensions 3 mm × 36 mm. The nozzle was designed such that two equally sized stips of 3 mm × 18 mm were co-extruded side by side in contact with each other. The obtained composite strip was extruded onto a conveyor whose speed was 3.7 m/min. and then passed into an acid setting bath to cause coagulation of the proteins and thereby improve handleability. The residence time in this bath was 5 seconds. The dough strip was then transferred to the product assembly conveyor also running at 3.7 m/min. The speeds, angles, and dimensions of the apparatus were as mentioned in Example I.

A filling of commercially available Sage and Onion stuffing mix was prepared per manufacturer's instructions and this was used as the central core filling around which the meat was helically wound. The filling was loaded into another piston-operated extrusion device and extruded at a linear speed of 1.8 m/min. and had a mean diameter of 14 mm. The raw products produced, using the above-mentioned machine settings, had overlapping joints, were 90 mm long, and had a diameter of 23 mm, a mass of 39 g, and a filling mass to container mass ratio of 1 : 2.2.

## Claims

1. An edible container comprising a plurality of strips of edible material helically wound in the same sense of rotation so as to form a hollow body, characterized in that the edible material is selected from raw bakery dough and meat dough and the strips have different compositions and/or colours and/or textures.

2. An edible container according to Claim 1, characterized in that it at least partially contains a filling material selected from the group consisting of savoury filling materials, sweet filling materials and dairy-type filling materials.

3. An edible container according to Claim 1, characterized in that it contains sausage or a string of sausages as a filling material.

4. A method of producing and at least partially filled, edible container, in which a plurality of strips of edible, flexible material are helically wound in the same sense of rotation so as to form a hollow body, characterized in that the edible material is selected from raw bakery dough and meat dough and the strips have different compositions and/or colours and/or textures and a filling is provided before baking the container.

5. A method according to Claim 4, characterized in that the filling is selected from the group consisting of savoury filling materials, sweet filling materials and dairy-type filling materials.

6. A method according to Claim 4, characterized in that the filling is sausage or a string of sausages.

7. A method according to Claims 4-6, characterized in that after its formation the edible container is severed into discrete pieces of desired length whilst the edible container is still in a rotary movement and the discrete pieces are kept in this rotary movement for a period of time which is sufficient to stabilize their form.

## Patentansprüche

1. Eßbarer Behälter, welcher eine Mehrzahl von Streifen aus einem eßbaren Material aufweist, welche schraubenlinienförmig im gleichen Drehsinn zur Bildung eines Hohlkörpers gewickelt, dadurch gekennzeichnet, daß das eßbare Material aus den Materialien roher Backteig und Fleischteig ausgewählt ist und daß die Streifen verschiedene Zusammensetzungen und/oder Farben und/oder Strukturen haben.

2. Eßbarer Behälter nach Anspruch 1, dadurch gekennzeichnet, daß er zumindest teilweise ein Füllmaterial enthält, welches aus der aus pikant gewürzten Füllmaterialien, süßen Füllmaterialien und molkereiproduktartigen Füllmaterialien bestehenden Gruppe ausgewählt ist.

3. Eßbarer Behälter nach Anspruch 1, dadurch gekennzeichnet, daß er Wurst oder eine Reihe von Würsten als Füllmaterial enthält.

4. Verfahren zur Herstellung eines mindestens teilweise gefüllten eßbaren Behälters, bei welchem Verfahren mehrere Streifen aus eßbarem biegsamen Material schraubenlinienförmig mit gleichem Drehsinn gewickelt werden, um einen Hohlkörper zu bilden, dadurch gekennzeichnet, daß das eßbare Material aus den Materialien roher Backteig und Fleischteig gewählt wird und die Streifen verschiedene Zusammensetzungen und/oder Farben und/oder Strukturen haben und daß eine Füllung vor dem Backen des Behälters vorgesehen wird.

5. Verfahren nach Anspruch 4, dadurch gekennzeichnet, daß die Füllung aus der aus pikant gewürzten Füllmaterialien, süßen Füllmaterialien und molkereiproduktartigen Füllmaterialien bestehenden Gruppe ausgewählt wird.

6. Verfahren nach Anspruch 4, dadurch gekennzeichnet, daß die Füllung Wurst oder eine Reihe von Würsten ist.

7. Verfahren nach den Ansprüchen 4 bis 6, dadurch gekennzeichnet, daß der eßbare Behälter, nachdem er gebildet worden ist, in einzelne Stücke von gewünschter Länge geschnitten wird, solange sich der eßbare Behälter noch in Drehbewegung befindet, und daß die einzelnen Stücke für einige Zeit, welche zur Stabilisierung ihrer Form ausreicht, in dieser Drehbewegung gehalten werden.

## Revendications

1. Croûte comestible comprenant une série de bandes en une matière comestible enroulées en hélice dans le même sens de rotation de façon à former un corps creux, caractérisée en ce que la matière comestible est choisie parmi la pâte de boulangerie et la pâte de viande crues et en ce que les bandes ont des compositions et/ou des couleurs et/ou des textures différentes.

2. Croûte comestible selon la revendications 1, caractérisée en ce qu'elle contient au moins partiellement une matière de remplissage choisie parmi les farces de canapés, les farces sucrées et les farces du type laitier.

3. Croûte comestible selon la revendication 1, caractérisée en ce qu'elle contient une saucisse ou un chapelet de saucisses à titre de matière de remplissage.

4. Procédé de production d'une croûte comestible au moins partiellement remplie, selon lequel on bobine en hélice une série de bandes de matière comestible flexible dans le même sens de rotation pour ainsi former un corps creux, caractérisé en ce que la matière comestible est choisie parmi la pâte de boulangerie et la pâte de viande crues et en ce que les bandes présentent des compositions et/ou des couleurs et/ou des textures différentes et en ce qu'on incorpore une farce avant de cuire au four la croûte.

5. Procédé selon la revendication 4, caractérisé en ce que la farce est choisie parmi les farces de canapés, les farces sucrées et les farces du type laitier.

6. Procédé selon la revendication 4, caractérisé en ce que la farce est une saucisse ou un chapelet de saucisses.

7. Procédé selon les revendications 4 à 6, caractérisé en ce qu'après sa formation, on tronçonne la croûte comestible en morceaux séparés ayant la longueur désirée pendant que la croûte comestible est encore en mouvement de rotation et les morceaux séparés sont maintenus dans ce mouvement de rotation pendant une durée suffisante pour en stabiliser la forme.

Fig.1.

Fig.2.

Fig.3.